(19) Europäisches Patentamt
European Patent Office
Office européen des brevets

(11) Veröffentlichungsnummer: **0 299 340 B1**

(12) **EUROPÄISCHE PATENTSCHRIFT**

(45) Veröffentlichungstag der Patentschrift: **27.05.92**

(51) Int. Cl.5: **B01D 53/34**, B01D 7/00, B09B 5/00, C22B 7/02

(21) Anmeldenummer: **88110747.8**

(22) Anmeldetag: **06.07.88**

(54) **Verfahren zur Entfernung von Schwermetallverbindungen aus dem Filterstaub von Müllverbrennungsanlagen, Rauchgasentstaubunbs- und Gasreinigungsanlagen.**

(30) Priorität: **15.07.87 CH 2677/87**

(43) Veröffentlichungstag der Anmeldung:
**18.01.89 Patentblatt 89/03**

(45) Bekanntmachung des Hinweises auf die Patenterteilung:
**27.05.92 Patentblatt 92/22**

(84) Benannte Vertragsstaaten:
**AT BE CH DE ES FR GB IT LI NL SE**

(56) Entgegenhaltungen:
EP-A- 0 176 499     EP-A- 0 272 465
EP-A- 0 274 037     DE-A- 3 018 319
FR-A- 2 457 904     FR-A- 2 581 656
US-A- 4 227 922     US-A- 4 673 431

(73) Patentinhaber: **BBC Brown Boveri Aktiengesellschaft**
**CH-5401 Baden(CH)**

(72) Erfinder: **Gessinger, Gernot, Dr.**
**Heigelweg 17**
**CH-5413 Birmenstorf(CH)**
Erfinder: **Mirbach, Manfred J., Prof. Dr.**
**Limmatauweg 8**
**CH-5400 Ennetbaden(CH)**
Erfinder: **Jochum, Joachim, Dr.**
**Brisgi 16/40**
**CH-5403 Baden(CH)**
Erfinder: **Wieckert, Christian, Dr.**
**Im Ergel 10**
**CH-5405 Baden(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Verfahren zum Entfernen von Schwermetallen und/oder Schwermetallverbindungen, insbesondere aus dem Filterstaub von Müllverbrennungsanlagen, Rauchgasentstaubungs- und Gasreinigungsanlagen

TECHNISCHES GEBIET

Bei der Erfindung wird ausgegangen von einem Verfahren zum Entfernen von schwermetallen und/oder Schwermetallverbindungen, insbesondere aus dem Filterstaub von Müllverbrennungsanlagen, Rauchgasentstaubungs- und Gasreinigungsanlagen nach dem Oberbegriff des Patentanspruchs 1.

STAND DER TECHNIK

Mit dem Oberbegriff nimmt die Erfindung auf einen stand der Technik Bezug, wie er aus der FR-A1-2 581 656 bekannt ist. Bei dem dort angegebenen 2stufigen elktrothermischen Verfahren zum Trennen von Schwermetallen aus Abfällen, wie z. B. von Kadmium, Eisen und Nickel aus elektrischen Batterien, wird der Abfall in einem Reaktionsgefäss erhitzt, bis das zu trennende Metall, z. B. Kadmium, verdampft. Dieses Metall wird dann in Luft oxydiert, das Oxid in einem Zyklon abgeschieden, danach mit einen Reduktionsmittel, wie z. B. Kohlenstoff, versetzt, nochmals verdampft, in einem Kühler kondensiert und entfernt. Das Zyklonabgas wird über einen Staubabscheider einer WasserRühreinrichtung zur Abscheidung kleinster Partikel zugeführt.

Aus der US-A-4,227,922 ist ein Verfahren zum Entfernen von Zinn oder Kupfer aus Schrott bekannt, bei dem die zu entfernenden Schwermetalle durch Unterdruck verdampft, anschliessend in einem Kühler abgeschreckt und durch Kondensation und Erstarrung in den festen Zustand überführt und entfernt werden. Der Heizkammer wird ein nichtoxydierendes Spülgas und Heizgas zugeführt, damit die Abfälle die Verdampfungstemperatur der zu entfernenden Schwermetalle erreichen können.

Aus der US-A-4,673,431 ist ein Verfahren zum selektiven Verdampfen von an Staubteilchen angelagerten Metalloxiden bekannt, bei dem der Staub vor dem Erhitzen zu Tabletten gepresst und anschliessend getrocknet wird. Verdampfte Metalle und Metalloxide werden über einen Schlauchfilter oder einen Kühler und die Tabletten direkt Reduktionskammern zugeführt, in welche Stickstoff und Kohlenmonoxid oder Wasserstoff als Reduktionsmittel geleitet werden.

Filterstaub von industriellen Verbrennungsanlagen, speziell Elektrofilterstaub hat einen hohen Gehalt an die Umgebung belastenden, umweltfeindlichen und zum Teil giftigen Schadstoffen. Darunter fallen gewisse organische und vor allem Schwermetallverbindungen beispielsweise der Elemente Pb, Zn, Cd, Tl, Cu. Deshalb gelten für derartige Gemische Sonderbestimmungen und der Filterstaub ist als Sonderabfall zu betrachten und zu behandeln.

Die Behandlung erfolgt zur Zeit nach 3 Prinzipien:

- Agglomerierung und Kompaktierung des Staubes zu grösseren Stücken mit Hilfe von Bindemitteln wie Zement, Asphalt etc. Anschliessend Endlagerung auf einer Mülldeponie (vgl. "Behandlung und Verfestigung von Rückständen aus Kehrichtverbrennungsanlagen" Schriftenreihe Umweltschutz Nr. 62, Bundesamt für Umweltschutz, Bern 1987). Dabei entsteht ein Produkt, dessen Masse grösser ist als diejenige des losen Ausgangsmaterials. Deswegen wird die Endlagerung teuer und wegen des meist nur beschränkten, zur Verfügung stehenden Raumes problematisch.
- Chemische Behandlung mit Säuren. Die Schwermetallverbindungen werden mit wässrigen Säuren ausgelaugt. Der schwermetallfreie Rückstand wird in einer Deponie gelagert, die schwermetallhaltigungen sauren Lösungen weiterverarbeitet (vgl. H. Vogg, "Rauchgasreinigungsverfahren", Vortrag beim VDI-Seminar 43-32-02, "Abfallbehandlung und -verwertung durch Müllverbrennung", VDI, Düsseldorf 1986). Bei diesen Auslaugeverfahren handelt es sich nicht um echte Lösungen des Abfallproblems sondern lediglich um eine Verschiebung auf eine andere Ebene. Die Weiterbehandlung der schwermetallhaltigen Lösungen und deren Konzentrierung ist mit einem beträchtlichen Energieaufwand verbunden. Es werden neue Probleme (Abwasser, Umweltverschmutzung) geschaffen.
- Thermomechanische Trennung durch Erhitzen des schwermetallbeladenen Staubes in einem Gasstrom, Verdampfung der Schwermetallverbindungen und mechanische Abtrennung der festen suspendierten Partikel von der Gasphase bei hohen Temperaturen (Heissgaszyklon, Heissgasfilter etc.). Die Schwermetalldämpfe werden anschliessend in einem Kühler kondensiert (vgl. W. Weissweiler et al, "Anreicherung von Thallium-und Bleihalogeniden", Staub, Reinhaltung der Luft, Bd. 46, Nr. 3, S. 120-124, März 1986). Die Heissgasabscheider (Zyklone, Elektrofilter, Keramikwabenfilter etc.) müssen bei hohen Temperaturen (1000 °C und mehr) isotherm arbeiten, was an ihre Konstruktion und ihren Betrieb sehr hohe Anforderungen stellt. Ausserdem ist eine Abtrennung des Feinstaubes (unter 1 μm Partikeldurchmesser), welcher prozentual als Träger der Schwermetallverbindungen übermässig stark ins Gewicht fällt, mit wirtschaftlichen Mitteln kaum zu bewerkstelligen.

Darstellung der Erfindung

Der Erfindung liegt die Aufgabe zugrunde, ein Verfahren zur Entfernung von Schwermetallverbindungen aus dem Filterstaub von Verbrennungsanlagen jeglicher Art anzugeben, welches unter Ausnutzung des Prinzips der Verdampfung und nachfolgenden Kondensation die heikle und aufwendige mechanische Trennung von Schadstoffdampf und Staubpartikeln bei hohen Temperaturen (Heissgasfiltration, Heissgastrennung) vermeidet und eine nachherige Wiederanlagerung der kondensierten Schadstoffe auf den Feinstaubpartikeln möglichst unterdrückt. Das Verfahren soll einfach sein und eine möglichst wirtschaftliche individuelle Weiterverarbeitung der verschiedenen getrennten Produkte zur Endlagerung gewährleisten.

Weg zur Ausführung der Erfindung

Die Erfindung wird anhand der nachfolgenden, durch Figuren näher erläuterten Ausführungsbeispiele beschrieben.

Dabei zeigt:

Fig. 1 ein Fliessdiagramm eines diskontinuierlichen Verfahrens zur Entfernung von Schwermetallverbindung unter Zuhilfenahme eines Trägergases,

Fig. 2 eine schematische Darstellung einer Vorrichtung zur diskontinuierlichen Entfernung von Schwermetallverbindungen,

Fig. 3 ein Fliessdiagramm eines kontinuierlichen Verfahrens zur Entfernung von Schwermetallverbindungen unter Zuhilfenahme eines Trägergases,

Fig. 4 ein Fliessdiagramm eines diskontinuierlichen Verfahrens zur Entfernung von Schwermetallverbindungen unter Anwendung von vermindertem Druck,

Fig. 5 ein Fliessdiagramm eines beliebigen Verfahrens zur Entfernung von Schwermetallverbindungen durch vorherige Abtrennung des Feinstaubes unter Zuhilfenahme eines Trägergases.

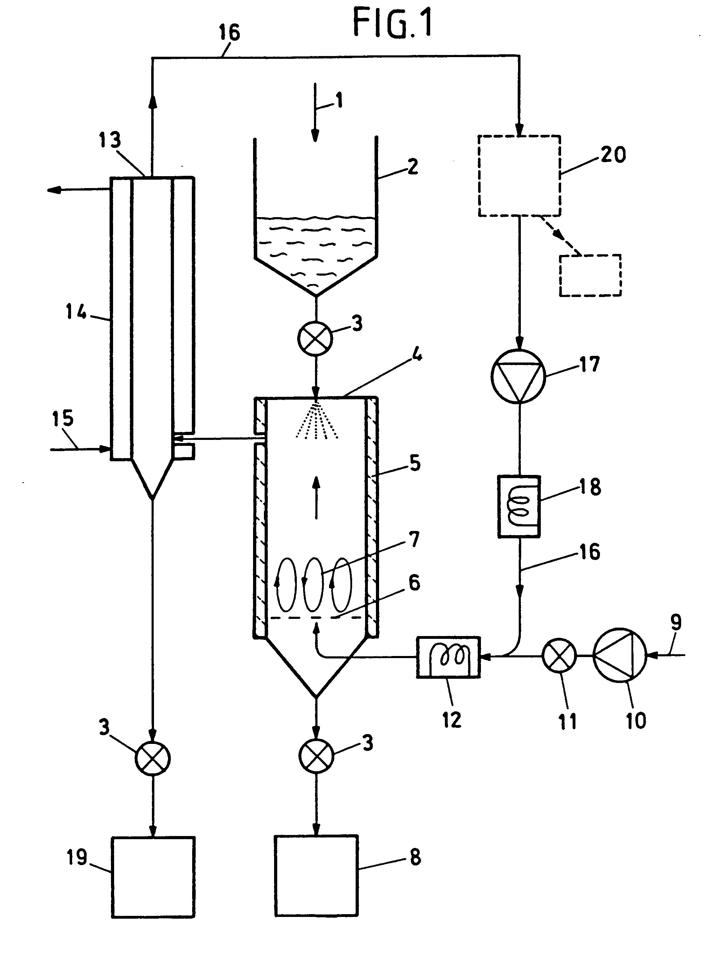

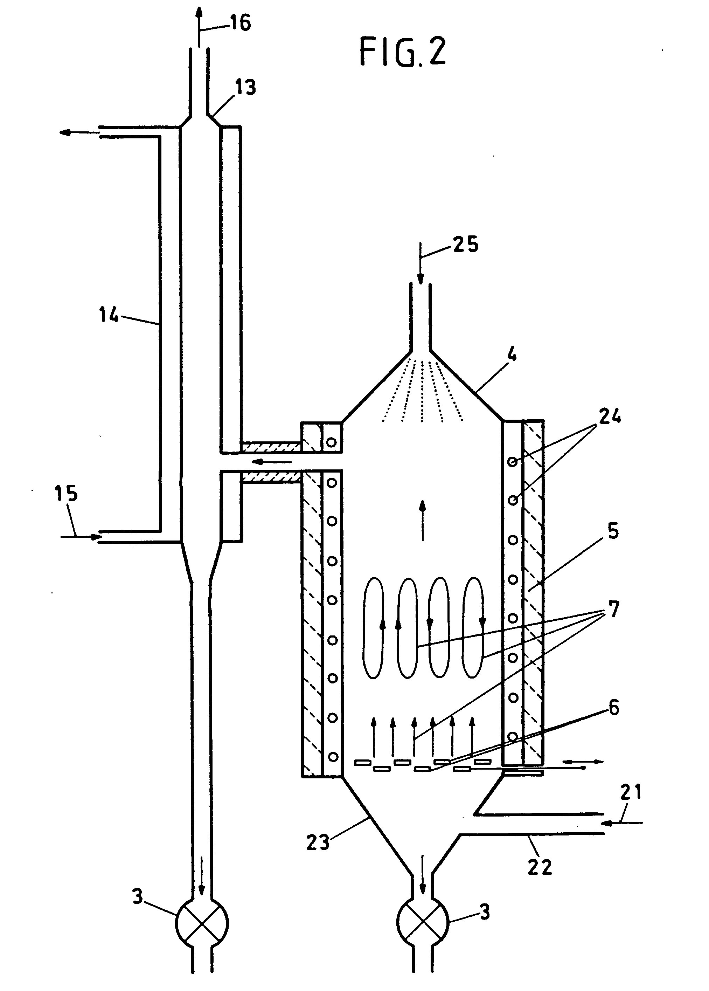

In Fig. 1 ist das Fliessdiagramm eines diskontinuierlichen, chargenweise arbeitenden Verfahrens zur Entfernung von Schwermetallverbindungen aus Filterstäuben unter Zuhilfenahme eines fluidisierenden Trägergases dargestellt. 1 ist die durch einen Pfeil angedeutete Rohstaubanlieferung an einen Staubsilo 2, der nach unten durch einen periodisch betätigbaren Schieber 3 für Feststoff abgeschlossen ist. 4 ist ein mit einer Wärmeisolation 5 (gegebenenfalls zusätzlich mit einer Heizung 24, vgl. Fig. 2!) versehenes Reaktionsgefäss für hohe Temperaturen (ca. 1000 °C, gegebenenfalls auch höher), welches in seinem Innern am unteren Ende einen Siebboden 6 (verschiebbar) enthält. Ueber dem Siebboden 6 wird im Betrieb eine Wirbelschicht 7 (Wirbelbett, Fliessbett) erzeugt (durch Pfeile angedeutet). Das untere, konische Ende des Reaktionsgefässes 4 ist über einen Schieber 3 mit einem Behälter 8 zur Aufnahme des gereinigten Staubes verbunden. 9 stellt das frische Trägergas dar (Eintritt, durch einen Pfeil angedeutet). 10 ist ein Gebläse zur Förderung des Trägergases 9, 11 ein entsprechender Absperrhahn für Gas. 12 stellt eine Heizung (bis ca. 1200 °C) für den teils mit Partikeln beladenen Gasstrom dar. Diese Heizung 12 ist vorteilhafterweise mit einer Regulierung versehen, da sie die Thermodynamik im Reaktionsgefäss 4 weitgehend bestimmt. 13 ist ein mit einem Kühlmantel 14 umgebener Kühler mit im Verhältnis zum Querschnitt grosser Längenabmessung. Das Kühlmittel 15 (meist Wasser) tritt am einen Ende des Kühlmantels 14 ein, am anderen aus (durch Pfeile angedeutet). 16 stellt das Umlaufgas dar, welches noch gewisse Anteile an in der Schwebe gehaltenen Staubpartikeln enthält. 17 ist die Umwälzpumpe (Gebläse) und 18 die Vorheizung (bis ca. 800 °C) für das Umlaufgas 16 Der Umlaufpumpe 17 kann ein Filter 20 zur Abscheidung von Staubpartikeln vorgeschaltet sein. 19 ist ein Behälter zur Aufnahme der Schwermetallverbindungen, welcher über den chargenweise zu betätigenden Schieber 3 mit dem unteren konischen Ende des Kühlers 13 verbunden ist.

Fig. 2 bezieht sich auf eine schematische Darstellung einer Vorrichtung zur diskontinuierlichen Entfernung von Schwermetallverbindungen aus Filterstäuben gemäss Verfahren nach Fig. 1. 3 sind die üblichen, diskontinuierlich (chargenweise) zu betätigenden Schieber für Feststoffe, 4 das Reaktionsgefäss für hohe Temperaturen, welches mit einer Heizung 24 und einer Wärmeisolation 5 in Form von entsprechenden Mänteln versehen ist. 6 stellt einen Siebboden dar, welcher hier als Doppelboden mit seitlich verschiebbarem unterem Teil (durch Doppelpfeil angedeutet) ausgeführt ist. Auf diese Weise lässt sich der Gasstrom regulieren. Nach Beendigung der Charge kann das Reaktionsgefäss 4 teilweise geöffnet werden zwecks Austragen des gereinigten Staubes. 7 ist die durch Pfeile gekennzeichnete Wirbelschicht. 25 ist die im oberen Teil des Reaktionsgefässes 4 durch ein zentrales Rohr erfolgende Rohstaubaufgabe. 21 ist das

EP 0 299 340 B1

Trägergas, 22 seine Zuleitung, 23 der Windkasten des Reaktionsgefässes 4, 16 das vom Kühler 13 abgezogene Umlaufgas, 14 der vom Kühlmittel 15 durchströmte Kühlmantel. Es ist darauf zu achten, dass der Kühler 13 durch eine möglichst kurze Leitung mit dem Reaktionsgefäss 4 verbunden ist. In der Praxis schliesst der erstere unmittelbar an den letzteren an, damit in der Verbindungsleitung keine unerwünschte Kondensation der Dämpfe der Schwermetallverbindungen stattfindet. In der Zeichnung sind 4 und 13 der Uebersichtlichkeit halber getrennt dargestellt.

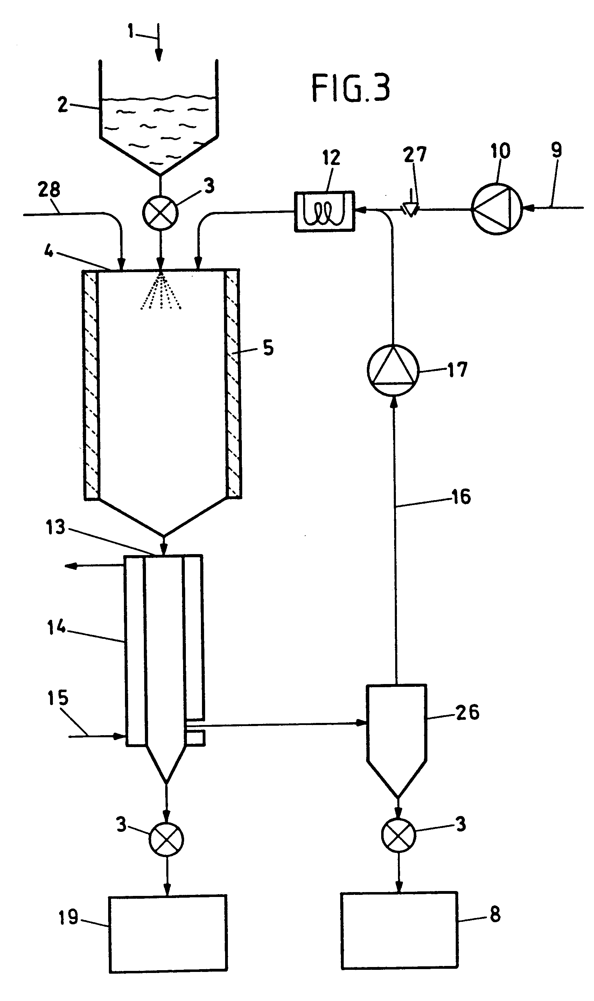

Fig. 3 zeigt ein Fliessdiagramm eines kontinuierlichen Verfahrens zur Entfernung von Schwermetallverbindungen aus Filterstäuben unter Zuhilfenahme eines fluidisierenden Trägergases. Die Bezugzeichen 1, 2, 3, 8 und 19 sowie ihre Bedeutung entsprechen genau denjenigen von Fig. 1. 9 ist das über das Gebläse 10 geförderte frische Trägergas, welches über das Ventil 27 und die Heizung 12 in das mit der Wärmeisolation 5 versehene Reaktionsgefäss 4 geleitet wird. Das Ventil 27 kann als Rückschlagventil, Differentialventil, gesteuertes oder geregeltes Ventil ausgebildet sein. Am unteren Ende des Reaktionsgefässes 4 schliesst unmittelbar der mit dem Kühlmantel 14 umgebene, sehr schlank ausgeführte Kühler 13 an.

Als Kühlmittel 15 wird meist Wasser verwendet. 28 stellt die gegebenenfalls notwendige oder gewünschte Aufgabe von Zusatzstoffen dar. Diese können physikalisch oder chemisch wirksam sein. Meistens handelt es sich um die Verdampfungstemperatur senkende Stoffe wie Metallhalogenide, $NH_4 Cl$ etc. oder um Reduktionsmittel wie C, CO etc.

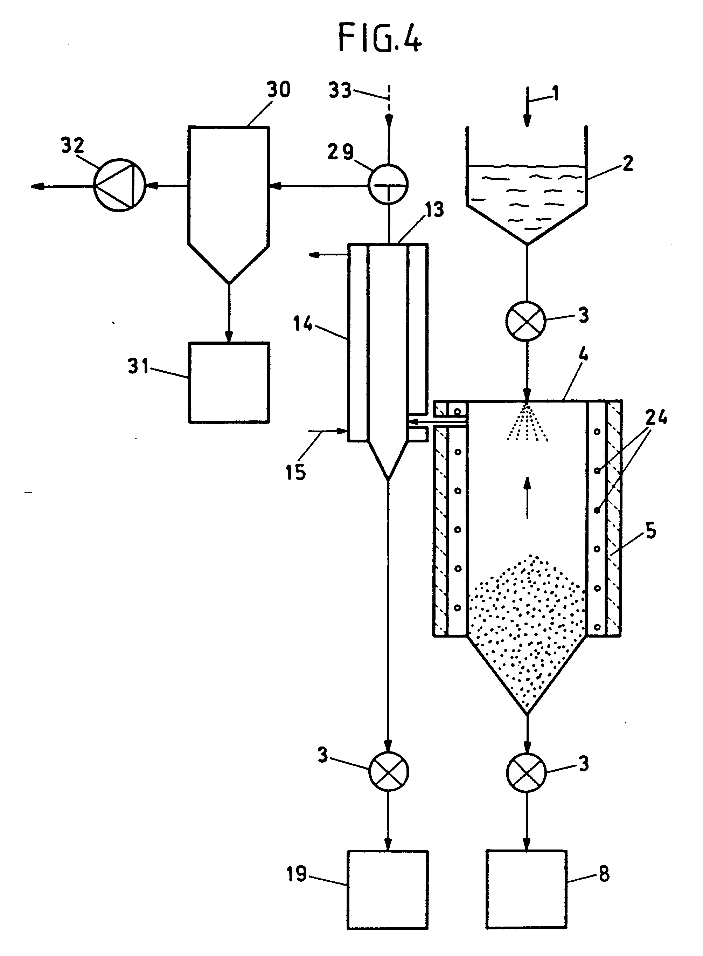

In Fig. 4 ist ein Fliessdiagramm eines diskontinuierlichen Verfahrens zur Entfernung von Schwermetallverbindungen aus Filterstäuben unter Anwendung von vermindertem Druck ("Vakuum") dargestellt. Die Bezugzeichen 1, 2, 3, 8 und 19 entsprechen genau denjenigen der Fig. 1. Das mit einer Heizung 24 (bis ca. 1200 °C) und einer Wärmeisolation 5 versehene Reaktionsgefäss 4 weist am unteren Ende einen konischen Teil auf, ist vakuumdicht ausgeführt und mit vakuumdichten Schiebern 3 gegen die Umgebung abschliessbar. An das Reaktionsgefäss 4 ist über einen kurzen Kanal unmittelbar der mit einem Kühlmantel 14 (Kühlmittel 15) versehene, vakuumdichte Kühler 13 angeschlossen, welcher über den ebenfalls vakuumdichten Schieber 3 periodisch mit dem Behälter 19 für Schwermetallverbindungen verbunden werden kann. Am oberen Ausgang des Kühlers 13 befindet sich ein vakuumdichter Dreiweghahn 29, dessen normale Betriebsstellung (eingezeichnet) so ist, dass er den Weg vom Kühler 13 über einen Filter 30 (Feinfilter) zu einer Vakuumpumpe 32 freigibt. Am Filter 30 ist ein Behälter 31 für Feinstaub (Filterstaub) angeschlossen. Ueber den Dreiweghahn 29 kann periodisch die temporäre Luftzufuhr 33 (gestrichelter Pfeil) zwecks Flutung der Anlage bewerkstelligt werden.

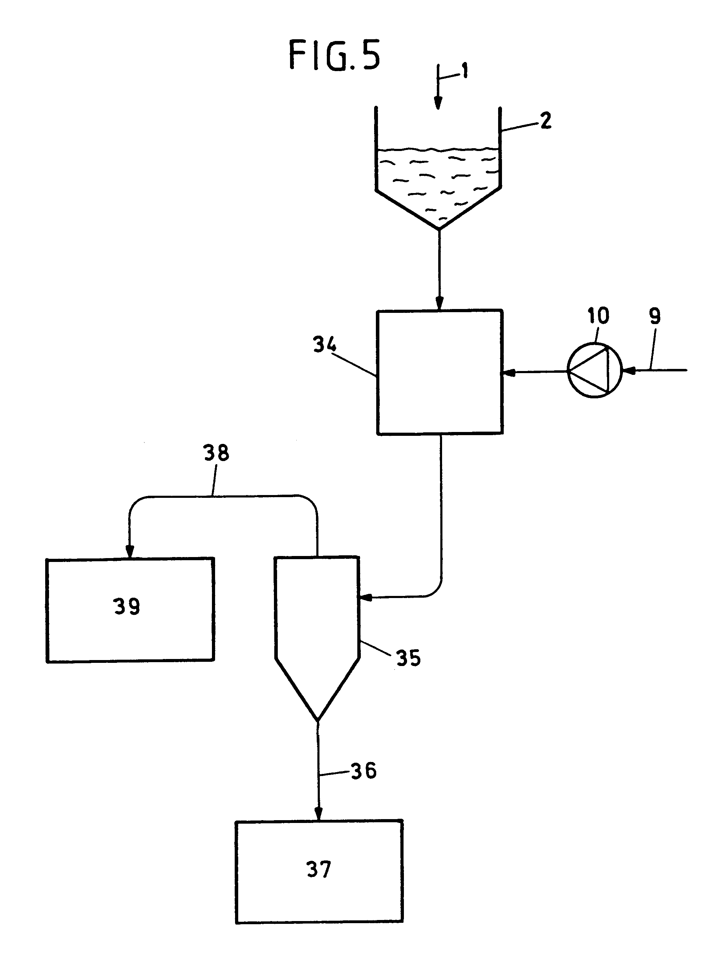

Fig. 5 bezieht sich auf ein Fliessdiagramm des beliebigen Verfahrens zur Entfernung von Schwermetallverbindungen aus Filterstäuben durch vorherige Abtrennung des Feinstaubes unter Zuhilfenahme eines Trägergases. 1 ist die Rohstaubanlieferung an den Staubsilo 2, der durch eine Rohrleitung mit einem Mischer 34 verbunden ist. 9 ist das Trägergas, welches vom Gebläse 10 in den Mischer 34 gefördert wird. Hier findet eine innige Durchwirbelung und Fluidisierung der Staubteilchen statt. Das fluidisierte Gas/Staub-Gemisch gelangt in den Trenner 35, wo die gröbere Fraktion (im vorliegenden Fall Partikeldurchmesser > 5 μm) als Staub 36 abgetrennt und in eine Anlage 37 (z.B. gemäss Fig 1 bis 4) zur Entfernung von Schwermetallverbindungen geleitet wird. Der Trenner 35 kann aus einem Filter (z.B. Elektrofilter) oder einem Zyklon bestehen. Trägergas + Staub (feinere Fraktion mit Partikeldurchmesser < 5 μm) 38 verlassen den Trenner 35 und werden zur Anlage 39 für Weiterverarbeitung gefördert. Diese kann grundsätzlich aus einer Müllverbrennungsanlage, einem Feinfilter oder einem Wäscher bestehen.

Ausführungsbeispiel 1:
Siehe Figuren 1 und 2!

In einer kleinen Versuchsanlage für chargenweisen Betrieb wurde Filterstaub aus einer Müllverbrennungsanlage behandelt. Das aus keramischem Werkstoff bestehende, mit einem Siebboden 6 versehene Reaktionsgefäss 4 hatte zylindrische Form. Sein Innendurchmesser betrug 50 mm, seine Höhe (innen, zylindrischer Teil) 200 mm. Der Kühler 13 bestand aus einem doppelwandigen Rohr aus nichtrostendem Stahl mit einem Innendurchmesser von 10 mm und einer Länge von 1000 mm. Der Kühlmantel 14 wurde von Wasser als Kühlmittel durchströmt.

Der Filterstaub enthielt unter anderem folgende Metalle:

Ca: 11,5 %
Cu: 0,09 %
Zn: 3,3 %
Pb: 0,8 %
Cd: 0,05 %

4

Sn:    0,34 %
Sb:    0,16 %
Ba:    0.,34 %

Es wurde eine Charge von 10 g Filterstaub in das Reaktionsgefäss 4 gegeben und auf eine Temperatur von 1000 °C aufgeheizt. Bei dieser Temperatur wurde der Staub mit Hilfe eines Stromes von Stickstoff als Trägergas 9 fluidisiert und in der Wirbelschicht 7 in Schwebe gehalten. Die Schwermetallverbindungen verdampften im Reaktionsgefäss 4 zum grossen Teil und wurden im Kühler 13 laufend kondensiert. Dabei waren die niedergeschlagenen Metallsalze nur wenig durch vom Gasstrom mitgerissene Feinstpartikel verunreinigt. Nach 1 h war der Prozess beendet und das Reaktionsgefässs 4 wurde abgekühlt. Der Filterstaub wurde vor und nach der thermischen Abtrennung der Schwermetallverbindungen analysiert. Dabei ergab sich folgendes Bild:

|  | Vor der Trennung | Nach der Trennung |
| --- | --- | --- |
| Gesamtmenge | 10,0 g | 8,0 g |
| Gehalt an Zn | 3,3 % | 0,3 % |
| Gehalt an Pb | 0,8 % | 0,4 % |
| Gehalt an Cd | 0,05 % | 0,005 % |

Ausserdem wurden Proben des Filterstaubes vor und nach der thermischen Trennung durch mit $CO_2$ gesättigtem Wasser ausgelaugt und dabei die gewonnenen Lösungen auf ihren Gehalt an Schwermetallionen untersucht:

| Schwermetall | Vor der Trennung (mg/l Lösung) | Nach der Trennung (mg/l Lösung) |
| --- | --- | --- |
| $Zn^{2+}$ | 1600 | 63 |
| $Pb^{2+}$ | 13 | 7,8 |
| $Cd^{2+}$ | 37 | 2,4 |

Ausführungsbeispiel 2:
Siehe Figuren 1 und 2!

In einer Versuchsanlage wurde Filterstaub aus einer Müllverbrennungsanlage ähnlich Beispiel 1 behandelt. Die Anlage war ähnlich Beispiel 1 aufgebaut, hatte jedoch grössere Abmessungen.

Es wurde eine Charge von 1000 g Filterstaub in das Reaktionsgefäss 4 gegeben und während 3 h auf einer Temperatur von 1000 °C gehalten. Als Trägergas 9 wurde statt Stickstoff das saure Abgas einer Müllverbrennungsanlage benutzt. Nach Beendigung der Charge wurde das Reaktionsgefäss abgekühlt und der Rückstand untersucht. Das Ergebnis stellte sich wie folgt:

| Analysierte | Vor der Trennung | Nach der Trennung |
| --- | --- | --- |
| Gesamtmenge | 10,0 g | 8,2 g |
| Gehalt an Zn | 3,3 % | 0,02 % |
| Gehalt an Pb | 0,8 % | 0,3 % |
| Gehalt an Cd | 0,05 % | 0,003 % |

Es wurden ausserdem Proben des Filterstaubes vor und nach der thermischen Trennung mit mit $CO_2$ gesättigtem Wasser ausgelaugt und die dabei erhaltenen Lösungen auf ihren Gehalt an Schwermetallionen untersucht:

| Schwermetall | Vor der Trennung (mg/l Lösung) | Nach der Trennung (mg/l Lösung) |
|---|---|---|
| $Zn^{2+}$ | 1600 | 1,3 |
| $Pb^{2+}$ | 13 | 2 |
| $Cd^{2+}$ | 37 | < 1 |

Daraus geht hervor, dass durch die Verwendung eines chemisch aktiven Gases anstelle des weitgehend inerten Stickstoffs eine bessere Ausbeute an Schwermetallentfernung aus dem Filterstaub erzielt werden konnte.

Ausführungsbeispiel 3:
Siehe Fig. 3!

In einer Versuchanlage für kontinuierlichen Betrieb wurde Filterstaub aus einer Müllverbrennungsanlage aufbereitet. Das Reaktionsgefäss 4 bestand aus feuerfestem keramischem Werkstoff und besass eine ebenfalls aus keramischem Material und Glaswolle bestehende mantelförmige Wärmeisolation 5. Der zylindrische Innenraum hatte einen Durchmesser von 100 mm und eine Höhe von 500 mm. Der mit einem von Wasser durchströmten Kühlmantel 14 versehene Kühler 13 hatte zylindrische Form und wies bei einem Innendurchmesser von 20 mm eine Höhe von 1600 mm auf.

Der Filterstaub wurde kontinuierlich in das Reaktionsgefäss 4 injiziert und durch auf 1400 °C vorgewärmtes Trägergas 9 (Heizung 12) fluidisiert. Letzteres bestand analog Beispiel 2 aus saurem Abgas einer Müllverbrennungsanlage. In das Reaktionsgefäss 4 wurden ausserdem 5 % $NH_4Cl$ bezogen auf die Menge des Filterstaubes als Zusatzstoff (28) eingespritzt. Der Durchsatz an Filterstaub betrug ca. 1 g/s, derjenige an Trägergas ca. 1 $dm^3$/s bezogen auf den Normalzustand. Somit ergab sich im Reaktionsgefäss 4 bei einer Temperatur von 1000 °C eine Strömungsgeschwindigkeit von ca. 0,55 m/s, im Kühler 13 eine solche von ca. 12,5 m/s am Eingang und ca. 5 m/s am Ausgang. Der nachgeschaltete Trenner 26 war als Zyklon ausgebildet und derart konstruiert und eingestellt, dass die gröbere Fraktion bis zu einer Partikelgrösse von 5 $\mu$m herunter mit mindestens 95 % Abscheidegrad abgetrennt wurde.

Vor und nach der Trennung wurde der Staub wie in den vorausgegangenen Beispielen untersucht. Das Ergebnis lautete:

| Analysierte | Vor der Trennung | Nach der Trennung |
|---|---|---|
| Gesamtmenge | 10,0 g | 8,4 g |
| Gehalt an Zn | 3,3 % | 0,3 % |
| Gehalt an Pb | 0,8 % | 0,1 % |
| Gehalt an Cd | 0,05 % | 0,0005 % |

Gleichzeitig wurden Proben des Filterstaubes gemäss Beispiel 1 ausgelaugt und die dabei gewonnenen Lösungen auf ihren Gehalt an Schwermetallionen untersucht:

| Schwermetall | Vor der Tennung (mg/l Lösung) | Nach der Trennung (mg/l Lösung) |
|---|---|---|
| $Zn^{2+}$ | 1600 | 43 |
| $Pb^{2+}$ | 13 | 0,9 |
| $Cd^{2+}$ | 37 | 0,2 |

Ausführungsbeispiel 4:
Siehe Fig. 3!

In einer Anlage für kontinuierlichen Betrieb wurde Filterstaub aus einer Müllverbrennungsanlage behandelt. Das Reaktionsgefäss 4 bestand aus hochhitzebeständiger Keramik und besass eine ebenfalls aus keramischem Material und Schlackenwolle bestehende Wärmeisolation 5 in Form eines Mantels. Der zylindrische Innenraum hatte einen Durchmesser von 200 mm und eine Höhe von 800 mm. Der aus rostfreiem Stahl bestehende Kühler 13 war aus 3 parallelgeschalteten zylindrischen Rohren von je 25 mm Innendurchmesser und 1800 mm Länge aufgebaut.

Als Trägergas 9 wurde Stickstoff in einer Menge von 4 dm$^3$/s (auf Normalzustand bezogen) verwendet, der in der Heizung 12 auf eine Temperatur von 1300 °C erwärmt wurde, um einen Ueberschuss an fühlbarer Wärme an die Beschickung abzugeben und sämtliche Wärmeverluste zu decken. Der nicht vorgeheizte Filterstaub wurde in einer Menge von ca. 1 g/s in das Reaktionsgefäss gegeben. Gleichzeitig wurde eine Menge von ca. 0,05 g/s Kokspulver (85 % C) injiziert, was ca. 4 % C bezogen auf den Filterstaub ausmachte. Der als Elektrofilter ausgeführte Trenner 26 hatte einen Abscheidegrad von 92 % für Partikel bis hinunter auf 3 $\mu$m Durchmesser. Die feine Fraktion wurde über die Umwälzpumpe 17 in den Kreislauf zurückgeführt. Vor und nach der Trennung wurde der Staub analysiert:

| Analysierte | Vor der Trennung | Nach der Trennung |
|---|---|---|
| Gesamtmenge | 10,0 g | 9,1 g |
| Gehalt an Zn | 3,3 % | 0,1 % |

| Analysierte | Vor der Trennung | Nach der Trennung |
|---|---|---|
| Gehalt an Pb | 0,8 % | 0,005 % |
| Gehalt an Cd | 0,05 % | nicht nachweisbar |

Die Proben des Filterstaubes wurden gemäss Beispiel 1 ausgelaugt und die gewonnenen Lösungen auf ihren Gehalt an Schwermetallionen untersucht:

| Schwermetall | Vor der Trennung (mg/l Lösung) | Nach der Trennung (mg/l Lösung) |
|---|---|---|
| Zn$^{2+}$ | 1600 | 8 |
| Pb$^{2+}$ | 13 | nicht nachweisbar |
| Cd$^{2+}$ | 37 | nicht nachweisbar |

Ausführungsbeispiel 5:
Siehe Fig. 3!

In der Versuchsanlage gemäss Beispiel 3 wurde Filterstaub aus einer Müllverbrennungsanlage behandelt.

Der Filterstaub wurde kontinuierlich in das Reaktionsgefäss 4 injiziert und fluidisiert. Als Trägergas 9 wurde mittels Heizung 12 auf 1200 °C vorgewärmter Stickstoff verwendet. Gleichzeitig wurden in das Reaktionsgefäss 4 als Zusatzstoff 28 3 Vol.-% CO bezogen auf das Stickstoffvolumen eingespritzt. Dadurch wurde ein reaktives (reduzierendes) Gemisch gebildet. Die Menge Filterstaub pro Gasvolumen betrug ca. 150 g/m$^3$, der Durchsatz an Filterstaub ca. 0,15 g/s, derjenige an Trägergas ca. 1 dm$^3$/s. Die mittlere Strömungsgeschwindigkeit im Reaktionsgefäss 4 bei einer Temperatur von 1000 °C betrug ca. 0,5 m/s, diejenige im Kühler 13 am Eingang ca. 12 m/s, am Ausgang ca. 5 m/s. Als Trenner 26 wurde ein Zyklon verwendet.

Der Staub wurde vor und nach der Trennung analog zu den vorausgegangenen Beispielen untersucht. Es ergaben sich folgende Werte:

| Analysierte | Vor der Trennung | Nach der Trennung |
|---|---|---|
| Gesamtmenge | 10,0 g | 8,2 g |
| Gehalt an Zn | 3,3 % | 0,5 % |
| Gehalt an Pb | 0,8 % | 0,4 % |
| Gehalt an Cd | 0,05 % | 0,005 % |

Proben des Filterstaubes wurden ausserdem mit einer mit $CO_2$ gesättigten wässrigen Lösung ausgelaugt und die Laugen auf ihren Gehalt an Schwermetallionen untersucht:

| Schwermetall | Vor der Trennung (mg/l Lösung) | Nach der Trennung (mg/l Lösung) |
|---|---|---|
| $Zn^{2+}$ | 1600 | 122 |
| $Pb^{2+}$ | 13 | 4,2 |
| $Cd^{2+}$ | 37 | 4,1 |

Ausführungsbeispiel 6:

In einer Versuchsanlage für kontinuierlichen Betrieb wurde Elektrofilterasche aus einer Müllverbrennungsanlage behandelt. In Abweichung von Fig. 3 wurde die Filterasche zunächst in einem Mischer mit Stickstoff fluidisiert (Durchsatz ca. 0,14 $dm^3/s$) und dann in einen elektrisch beheizten Reaktionsofen geschickt. Dabei wurde das fluidisierte Gemisch auf eine Temperatur von 1100 °C gebracht und während einer Verweilzeit von 3 s auf dieser Temperatur gehalten. Bei dieser Gelegenheit wurde der grösste Teil der Schwermetallverbindungen verdampft und ging in die Gasphase über. Anschliessend durchströmte das Gas/Partikelgemisch einen hohlzylindrischen Kühler von 10 mm Innendurchmesser, an dessen Innenwand die Schwermetallverbindungen kondensierten. Der abgekühlte, partikelbeladene, von Schwermetallverbindungen weitgehend befreite Gasstrom wurde in ein Staubfilter geleitet, wo der Staub ausgeschieden wurde.

Die Analyse ergab folgendes Bild:

| Analysierte | Vor der Trennung | Nach der Trennung |
|---|---|---|
| Gesamtmenge | 8,0 g | 6,5 g |
| Gehalt an Zn | 3,3 % | 0,07 % |
| Gehalt an Pb | 0,8 % | 0,02 % |
| Gehalt an Cd | 0,05 % | 0,001 % |

Proben des Filterstaubes wurden mit Wasser, das an $CO_2$ gesättigt war, ausgelaugt. Dabei ergab sich folgender Schwermetallgehalt der Lösung:

| Schwermetall | Vor der Trennung (mg/l Lösung) | Nach der Trennung (mg/l Lösung) |
|---|---|---|
| $Zn^{2+}$ | 1600 | 45 |
| $Pb^{2+}$ | 13 | 0,9 |
| $Cd^{2+}$ | 37 | 0,8 |

Ausführungsbeispiel 7:
Siehe Fig. 4!

In einer kleinen Versuchanlage für diskontinuierlichen, chargenweisen Betrieb wurde Filterstaub aus einer Müllverbrennungsanlage aufbereitet. Das aus keramischem Material bestehende Reaktionsgefäss 4 hatte eine hohlzylindrische Form mit einem konischen Boden. Es war mit einer Heizung 24 und einer mantelförmigen Wärmeisolation 5 ausgestattet. Der Innendurchmesser betrug 40 mm, die Höhe 240 mm. Der Kühler 13 bestand aus einem doppelwandigen Rohr von 6 mm Innendurchmesser und 1500 mm Länge. Der Kühlmantel 14 wurde mit Wasser als Kühlmittel 15 beaufschlagt.

Die Charge bestand aus 100 g Filterstaub, der im Reaktionsgefäss 4 auf 1000 °C erhitzt wurde. Gleichzeitig wurde die ganze Vorrichtung über den Dreiweghahn 29 mit Hilfe der Vakuumpumpe 32 langsam mit einem Druckabfall von 10 kpa/min bis auf einen Enddruck von 1 kPa (ca. 0,01 bar) evakuiert. Der Vorgang dauerte somit ca. 10 min. Die Charge wurde während ca. 1 h in diesem Zustand gehalten. Dabei dampften die Schwermetallverbindungen unter dem verminderten Druck weitgehend ab und kondensierten bzw. sublimitierten im schlanken Kühler 13, wo sie nach Beendigung der Charge über den

8

vakuumdichten Schieber 3 ausgetragen wurden. Die Vorrichtung wurde nun über den Dreiweghahn 29 belüftet, der Staubrückstand vom Reaktionsgefäss 4 nach unten abgezogen und letzteres mit der nächsten Charge beschickt.

Der vom Dampfstrom mitgerissene Feinstaub wurde im Filter 30 von der Vakuumpumpe 32 ferngehalten und periodisch ausgetragen.

Vor und nach der Trennung wurde der Staub analysiert, wobei sich folgendes Bild ergab:

| Analysierte | Vor der Trennung | Nach der Trennung |
|---|---|---|
| Gesamtmenge | 10,0 g | 8,4 g |
| Gehalt an Zn | 3,3 % | 0,4 % |
| Gehalt an Pb | 0,8 % | 0,4 % |
| Gehalt an Cd | 0,05 % | 0,005 % |

Proben des Filterstaubes wurden mit Wasser, das an $CO_2$ gesättigt war, ausgelaugt. Der Gehalt der Lösungen an Schwermetallen zeigte sich wie folgt:

| Schwermetall | Vor der Trennung (mg/l Lösung) | Nach der Trennung (mg/l Lösung) |
|---|---|---|
| $Zn^{2+}$ | 1600 | 87 |
| $Pb^{2+}$ | 13 | 6,4 |
| $Cd^{2+}$ | 37 | 1,7 |

Ausführungsbeispiel 8:
Siehe Fig. 5!

Filterstaub aus einer Müllverbrennungsanlage wurde vor der Entfernung der Schwermetallverbindungen mechanisch in der Weise aufbereitet, dass er in eine gröbere und eine feinere Fraktion geteilt wurde.

Frisches Trägergas 9 wurde mittels eines Gebläses 10 in den Mischer 34 gedrückt. Der Durchsatz betrug ca. 0,55 dm$^3$/s. Aus dem Staubsilo 2 wurde Filterstaub in den Mischer gegeben, so dass eine Suspension von ca. 100 g Staub/m$^3$ gebildet wurde. Daß auf diese Weise fluidisierte Gemisch wurde im kalten Zustand durch einen Zyklon 35 gefördert, wo die gröbere Fraktion mit mehr als ca. 5 $\mu$m Partikeldurchmesser abgeschieden wurde. Diese Fraktion stellte ca. 98 % der Masse des gesamten Staubes dar. Sie wurde direkt einer Anlage 37 für Entfernung von Schwermetallverbindungen - im vorliegenden Fall gemäss Fig. 3 -zugeführt. Der durch den Zyklon 35 hindurchgehende, mit dem Trägergas geförderte Staub 38 machte noch ca. 2 % der Masse des ursprünglichen Staubes aus und wurde in eine Anlage 39 zur Weiterverarbeitung geleitet. Dieser Staub wurde in einem Feinstfilter abgeschieden und gesondert weiterbehandelt.

Die Erfindung ist nicht auf die Ausführungsbeispiele begrenzt. Der Filterstaub wird im Reaktionsgefäss bis zur Verdampfungstemperatur der zu entfernenden Schwermetallverbindungen beim herrschenden Partialdruck erhitzt und der entstehende Dampf rein thermisch von den Staubpartikeln getrennt, indem das Gemisch abgeschreckt wird und der Dampf durch Kondensation oder Erstarrung bzw. Sublimation in den flüssigen oder festen Aggregatzustand übergeführt wird. Mindestens ein Teil des Trägergases wird beim Verfahren mit Fluidisierung mittels eines gasförmigen Mediums als Umlaufgas im Kreisprozess zur Aufgabestelle des Filterstaubes zurückgeführt. Das Trägergas wird vorteilhafterweise derart vorgeheizt, dass der gesamte Wärmehaushalt - von Verlusten abgesehen - durch seine fühlbare Wärme gedeckt wird. Auf diese Weise werden hohe Wärmeübergangszahlen für die Erwärmung der Beschickung erzielt. Die Arbeitsweise kann grundsätzlich kontinuierlich oder diskontinuierlich, in Form von Chargen erfolgen. Im letzteren Fall kann auch chargenweise ohne Trägergas unter stark vermindertem Partialdruck für die zu verdampfenden Schwermetallverbindungen oder unter Vakuum gearbeitet werden. Dadurch kann die Verdampfungstemperatur wesentlich gesenkt, der Verdampfungsprozess beschleunigt und die Ausbeute an Schwermetallverbindungen im Kondensat/Sublimat verbessert werden. Dem Filterstaub können grundsätzlich bei allen Verfahren im Reaktionsgefäss zusätzlich feste, flüssige oder gasförmige Stoffe zugeführt werden, indem man sie dem Staub selbst oder dem allfälligen Trägergas beimischt oder direkt ins Reaktionsgefäss einführt. Diese Stoffe wirken physikalisch und/oder chemisch auf die Beschickung ein, indem sie die Verdampfung der Schwermetallverbindungen beschleunigen durch Herabsetzung der Verdampfungstemperatur, Ueberführung der Schwermetalle in leichter flüchtige Substanzen etc. In vorteilhafter Weise werden Metallhalogenide, Ammoniumhalogenide oder Reduktionsmittel, vorzugsweise Kohlenstoff oder Kohlenmonoxyd zugegeben. Es ist von Vorteil, den Filterstaub vor der Entfernung der Schwermetallverbindungen im kalten Zustand rein mechanisch in eine gröbere und eine feinere Fraktion (z.B. weniger als 5 $\mu$m Partikelgrösse) aufzuspalten und jede Fraktion getrennt weiterzubehandeln. Die Trennung kann auf mechanische, pneumatische oder hydraulische Art mit Hilfe von Zyklonen, Elektrofiltern, Trockenfiltern, Wäschern etc. erfolgen. Die gröbere Fraktion geht in die Anlage zur Schwermetallentfernung, die feinere in die Anlage zur Konzentration, Agglomeration, Brikettierung und Deponie (Endlagerung) etc.

**Patentansprüche**

1. Verfahren zum Entfernen von Schwermetallen und/oder Schwermetallverbindungen, insbesondere aus dem Filterstaub von Müllverbrennungsanlagen, Rauchgasentstaubungs- und Gasreinigungsanlagen,
   a) bei dem der Filterstaub (1, 25) in einem Reaktionsgefäss (4) mindestens bis zur Verdampfungstemperatur der zu entfernenden Schwermetalle und/oder Schwermetallverbindungen erhitzt wird und
   b) zumindest die dampfförmigen Schwermetalle und/oder Schwermetallverbindungen anschliessend in einem Kühler (13) abgeschreckt und in den flüssigen oder festen Zustand überführt und
   c) entfernt werden,
   dadurch gekennzeichnet,
   d) dass vor der Verdampfung der zu entfernenden Schwermetalle und/oder Schwermetallverbindungen Feinstaubteilchen mit Partikelgrössen kleiner als 5 um in kaltem Zustand auf mechanische oder hydraulische oder pneumatische Art oder durch Filtrierung abgeschieden werden und der restliche Filterstaubanteil dem Reaktionsgefäss (4) zugeführt wird.

2. Verfahren nach Anspruch 1, dadurch gekennzeichnet,
   a) dass dem erhitzten Filterstaub (1, 25) durch einen Siebboden (6) des Reaktionsgefässes (4) ein Trägergas im Gegenstrom zugeführt wird,
   b) welches vor der Durchströmung des Siebbodens (6) auf eine Temperatur im Bereich von 1100 °C - 1400 °C aufgeheizt wird,
   c) wobei ein Teil des Trägergases (9) als Umlaufgas (16) mit dem frischen Trägergas (9) vor der Aufheizung vermischt wird.

3. Verfahren nach Anspruch 2, dadurch gekennzeichnet, dass das frische Trägergas (9) und das Umlaufgas (16) dem Reaktionsgefäss (4) unter Erzeugung einer StaubWirbelschicht (7) oberhalb des Siebbodens (6) zugeführt werden.

4. Verfahren nach Anspruch 1, dadurch gekennzeichnet, dass der Filterstaub (1) ohne Zuhilfenahme eines Trägermediums transportiert, aus dem Kühler (13) unter vermindertem Druck im Gegenstrom zu den zu kondensierenden Schwermetallen und/oder Schwermetallvorbindungen abgesaugt und durch Filtrierung abgetrennt wird.

**Claims**

1. Process for removing heavy metals and/or heavy metal compounds, especially from the filter dust from refuse incinerators, flue gas dust precipitators and gas-cleaning units,
   a) in which the filter dust (1, 25) is heated in a reaction vessel (4) at least up to the vaporisation temperature of the heavy metals and/or heavy metal compounds which are to be removed,
   b) at least the vaporous heavy metals and/or heavy metal compounds are then quenched in a cooler (13) and converted to the liquid or solid state and
   c) are removed,
   characterised in that,
   d) before the vaporisation of the heavy metals and/or heavy metal compounds to be removed, superfine dust particles of particle sizes smaller than 5 $\mu$m are separated off in the cold state by mechanical or hydraulic or pneumatic means or by filtration, and the remaining filter dust fraction is fed to the reaction vessel (4).

2. Process according to Claim 1, characterised in that

EP 0 299 340 B1

a) a carrier gas is fed in countercurrent to the heated filter dust (1, 25) through a sieve tray (6) of the reaction vessel (4),

b) which carrier gas is heated to a temperature in the range of 1100°C-1400°C before flowing through the sieve tray (6),

c) a part of the carrier gas (9) being mixed as circulating gas (16) with the fresh carrier gas (9) before heating.

3. Process according to Claim 2, characterised in that the fresh carrier gas (9) and the circulating gas (16) are fed to the reaction vessel (4) to generate a fluidised dust bed (7) above the sieve tray (6).

4. Process according to Claim 1, characterised in that the filter dust (1) is transported without the aid of a carrier medium, is extracted from the cooler (13) under vacuum in countercurrent to the heavy metals and/or heavy metal compounds to be condensed and is separated off by filtration.

**Revendications**

1. Procédé pour éliminer les métaux lourds et/ou les composés de métaux lourds, en particulier hors des poussières de filtres d'installations d'incinération d'ordures ménagères, d'installations de dépoussiérage de fumées et d'épuration de gaz,

a) dans lequel les poussières de filtres (1, 25) sont chauffées dans une enceinte de réaction (4) au moins-jusqu'à la température de vaporisation des métaux lourds et/ou des composés de métaux lourds à éliminer, et

b) au moins les métaux lourds et/ou les composés de métaux lourds vaporisés sont ensuite refroidis brusquement dans un refroidisseur (13) et ramenés à l'état liquide ou solide, et

c) sont éliminés,

caractérisé en ce que

d) avant la vaporisation des métaux lourds et/ou des composés de métaux lourds à éliminer, les fines particules de poussières avec des tailles de particules inférieures à 5 $\mu$m sont séparées à froid par voie mécanique ou hydraulique ou pneumatique ou par filtrage et la partie restante des poussières de filtres est introduite dans l'enceinte de réaction (4).

2. Procédé suivant la revendication 1, caractérisé en ce que

a) dans les poussières de filtres chauffées (1, 25), on ajoute un gaz porteur à contre-courant à travers un plateau perforé (6) de l'enceinte de réaction (4),

b) gaz qui est chauffé à une température comprise dans la gamme de 1100°C-1400°C avant de franchir le plateau perforé (6),

c) une partie du gaz porteur (9) étant, en guise de gaz de circulation (16), mélangée au gaz porteur frais (9) avant son échauffement.

3. Procédé suivant la revendication 2, caractérisé en ce que le gaz porteur frais (9) et le gaz de circulation (16) sont introduits dans l'enceinte de réaction (4) en produisant une couche fluidisée au-dessus du plateau perforé (6).

4. Procédé suivant la revendication 1, caractérisé en ce que les poussières de filtres (1) sont transportées sans l'intervention d'un agent porteur, sont aspirées hors du refroidisseur (13) sous une pression réduite à contre-courant par rapport aux métaux lourds et/ou aux composés de métaux lourds à condenser et sont séparées par filtrage.

11

# FIG.1

## FIG.2

# FIG.3

# FIG.4

# FIG.5